# EUROPÄISCHE PATENTSCHRIFT

(11) **EP 1 108 070 B1**
(45) Veröffentlichungstag und Bekanntmachung des Hinweises auf die Patenterteilung: **09.10.2002**
(21) Anmeldenummer: 99947265.7
(22) Anmeldetag: 30.07.1999
(51) Int. Cl.: C21B 13/10, C22B 7/00, F27B 9/18, C21B 3/04

(54) **VERFAHREN ZUR THERMISCHEN BEHANDLUNG SCHWERMETALL- UND EISENOXIDHALTIGER RESTSTOFFE**
METHOD FOR THE THERMAL PROCESSING OF RESIDUES CONTAINING HEAVY METALS AND IRON OXIDE
PROCEDE PERMETTANT DE TRAITER THERMIQUEMENT DES RESIDUS CONTENANT DES METAUX LOURDS ET DE L'OXYDE DE FER

(30) Priorität: 11.08.1998 LU 90273
(43) Veröffentlichungstag der Anmeldung: 20.06.2001
(73) Patentinhaber: PAUL WURTH S.A., 1122 Luxembourg (LU)
(72) Erfinder: HANSMANN, Thomas, D-54296 Trier (DE); FRIEDEN, Romain, L-6235 Beidweiler (LU); SOLVI, Marc, L-3961 Ehlange s/Mess (LU)
(74) Vertreter: Kihn, Pierre Emile Joseph
(86) Internationale Anmeldenummer: EP9905456
(87) Internationale Veröffentlichungsnummer: WO00009766

(56) Entgegenhaltungen:
- EP-A- 0 046 146
- DE-B- 1 225 673
- DE-C- 552 837
- FR-A- 913 032
- FR-A- 1 128 520
- FR-A- 2 373 612
- GB-A- 2 043 112
- LU-A- 87 890
- US-A- 2 389 133
- US-A- 3 756 804
- US-A- 3 850 613
- US-A- 4 261 268

## Beschreibung

Die vorliegende Erfindung betrifft ein Verfahren zur thermischen Behandlung schwermetall- und eisenoxidhaltiger Reststoffe wie z.B. Stäube aus Elektrostahtwerken oder Schlämmen aus Konverterstahlwerken

In den Elektro- oder Konverterstahlwerken fallen große Mengen an schwermetall- und eisenoxidhaltigen Reststoffe in Form von Staub oder Schlamm an. Reststoffe werden durch Abgasreinigungsanlagen aus den Abgasen als Staub oder als Schlamm abgeschieden. Die Entsorgung dieser Reststoff ist kostspielig bzw. die Endlagerung dieser Stoffe ist problematisch. Die Schlämme werden meist in künstlichen Seen unter offenem Himmel gelagert, während die Stäube untertage in Stollen abgelagert werden.

Typische Zusammensetzungen von schwermetallhaltigen Stäuben und Schlämmen aus Elektro- bzw. Konverterstahlwerken sind in der folgenden Tabelle gezeigt

**Tabelle 1**

| | Fe(%) | Zn(%) | Pb (%) | C(%) | H₂O(%) |
|---|---|---|---|---|---|
| Stäube | 20-30 | 20-35 | 1-10 | 1-2 | - |
| Schlämme | 20-30 | 2-8 | 1-5 | - | 30-40 |

Im Dokument US 3,756,804 wird ein Verfahren zur thermischen Behandlung schwermetall- und eisenoxidhaltiger Abgasstäube in einem Etagenofen, welcher mehrere übereinanderliegende Etagen aufweist, beschrieben. Die schwermetall- und eisenoxidhaltige Abgasstäube werden mit Reduktionsmittel gemischt, danach auf die oberste Etage des Etagenofens eingetragen, und nach und nach auf die unteren Etagen transferiert. Das Reduktionsmittel reagiert mit den schwermetall- und eisenoxidhaltigen Abgasstäube, um Schwermetalle und direkt reduziertes Eisen zu bilden, wobei die Schwermetalle verdampfen. Eine Umgehungsleitung, die in der Höhe der obersten Zwischenetage in dem Ofenwand angeordnet ist, leitet die Gase zu einem Kondensatorkühler, in dem die Temperatur der Gase so abgesenkt wird, daß die Schwermetalle kondensieren und sich auf Platte in dem Kondensatorkühler absetzen. Die im wesentlichen von den verdampften Schwermetallen freigesetzten Gase werden danach erhitzt und anschließend im unteren Teil des Ofen eingeführt. Der Gehalt an Schwermetallen im Gas, das im Kondensatorkühler zu behandeln ist, ist relativ niedrig.

Aufgabe der vorliegenden Erfindung ist es folglich, ein verbessertes Verfahren zur thermischen Behandlung solcher schwermetall- und eisenoxidhaltiger Reststoffe vorzuschlagen.

Diese Aufgabe wird erfindungsgemäß gelöst durch ein Verfahren zur thermischen Behandlung schwermetall- und eisenoxidhaltiger Reststoffe in einem Etagenofen, welcher mehrere übereinanderliegende Etagen aufweist, in dem schwermetall- und eisenoxidhaltige Reststoffe kontinuierlich in den Etagenofen eingebracht werden und auf die oberste Etage eingetragen und nach und nach auf die unteren Etagen transferiert werden,

Reduktionsmittel auf die oberste und/oder auf eine der darunterliegenden Etagen eingebracht werden und mit den schwermetall- und eisenoxidhaltigen Reststoffen reagieren, um Schwermetalle und direkt reduziertes Eisen zu bilden,
die schwermetallhaltigen Gase separat auf den Etagen auf denen die Schwermetalle verdampfen abgesaugt werden, und
das Eisen zusammen mit Rückständen von den Reduktionsmitteln im Bereich der untersten Etage des Etagenofens ausgetragen wird,
wobei unterhalb der Etagen auf denen die Schwermetalle verdampfen, Gase aus dem Etagenofen abgesaugt werden und anschließend ganz oder teilweise oberhalb dieser Etagen wieder in den Etagenofen eingeblasen werden.

Ein wesentlicher Vorteil der Erfindung besteht darin, daß es gelingt, die als Mischung vorliegenden Metalloxide zu reduzieren und die Schwermetalle ohne großen Aufwand zu separieren (insbesondere Eisen und Zink), so daß die getrennten Fraktionen Eingangsstoffe für andere Prozesse darstellen bzw. in die bestehenden Produktionslinien der Stahlwerke zurückgeführt werden können. Somit können aus wesentlichen Bestandteilen der Reststoffe Wertstoffe hergestellt werden. Der Eisenanteil kann nach Durchlaufen des Prozesses in den Produktionsablauf des Stahlwerkes zurückgeführt werden. Schwermetalloxide werden soweit konzentriert, daß sie als Rohstoff zur Gewinnung von Schwermetallen eingesetzt werden können. Übrig bleiben eventuell Aschen, die im wesentlichen aus Inertstoffen wie SiO₂, Al₂O₃, MgO,... und aus einem Überschuß an Reduktionsmitteln bestehen.

Sobald die Reduktionsmitttel in den Ofen eingegeben worden sind, werden sie von den Rechen unter die schwermetall- und eisenoxidhaltigen Reststoffe gemischt und erhitzt Sobald sie eine gewisse Temperatur erreicht haben (ungefähr 900°C) beginnen sie mit den Schwermetalloxiden zu reagieren, wobei sich Schwermetalle bilden die sich verflüchtigen und ebenso wie die Abgase aus dem Etagenofen ausgetragen werden.

Nach dem vorliegendem Verfahren wird einen Teil der Gase, die im Ofen nach oben strömen unterhalb den Etagen, auf denen Schwermetalle verdampfen z.B. durch einen Absaugstutzen in der Seitenwand aus dem Ofen abgesaugt und oberhalb dieser Etagen z.B. durch einen Einlaß wieder in den Ofen eingeblasen. Dadurch ist die auf den Etagen, auf denen die Schwermetalloxide zu Schwermetallen reduziert werden und sich verflüchtigen, vorhandene Gasmenge gering. Die Schwermetalle können dann in einer relativ geringen Gasmenge auf diesen Etagen durch einen Auslaß in der Seitenwand aus dem Ofen abgesaugt werden. Das abgezogene Gasgemisch wird nachverbrannt, in einer Abkühlvorrichtung abgekühlt und anschließend mit Hilfe eines Filters gereinigt, bevor es nach außen gelangt.

Durch die geringen Abgasmengen ergeben sich auf den entsprechenden Etagen niedrige Gasgeschwindigkeiten und so wird wenig Staub mit diesem Abgas ausgetragen. Dadurch ergibt sich eine sehr hohe Schwermetallkonzentration im Abgas.

Die Schwermetalle werden auf den Etagen, wo sie gebildet werden, abgesaugt und können vorteilhaft getrennt von den übrigen Abgasen behandelt werden.

Die Abgase werden anschließend z.B. in einer Nachbrennkammer oxidiert wobei die Schwermetalle zu Schwermetalloxiden umgewandelt werden welche dann in einer Filtereinrichtung von den Abgasen getrennt werden können.

Gleichzeitig oder zu einem späteren Zeitpunkt werden die im Etagenofen verbliebenen Eisenoxide zu metallischem Eisen reduziert. Das auf diese Art erzeugte metallische Eisen wird zusammen mit den Rückständen des eingebrachten Materials, den Aschen der Reduktionsmittel und dem eventuell vorhandenen Überschuß an Reduktionsmitteln aus dem Ofen ausgetragen.

In diesem Verfahren können staub- oder schlammförmige, schwermetall- und eisenoxidhaltige Reststoffe aufgegeben werden wobei durch eine gezielte Prozeßführung und durch dauerndes Umwälzen ein Zusammenbacken der Partikel vermieden wird. Unabhängig von der Konsistenz des Eingangsmaterials liefert der Prozeß ein feinkörniges Endprodukt.

Dies ist von besonderem Vorteil, wenn aschebildende Reduktionsmittel eingesetzt werden. Da das feste Endprodukt feinkörnig , ist die Trennung .der Asche vom Eisen leicht durchführbar. Diese Abtrennung kann z. B. im heißen Zustand über Klassierung erfolgen.

Nach einer Abkühlung unter 700°C ist es andererseits möglich, das reduzierte Eisen über Magnetabscheider von der Asche und überschüssigem Reduktionsmittel zu trennen. Die Qualität des so gewonnenen direkt reduzierten Eisens ist nahezu unabhängig von der Menge der Rückstände des Reduktionsmittels.

Das gewonnene Eisen kann anschließend zu Briketts verarbeitet werden oder direkt in einen Einschmelzofen (Elektroofen usw.) eingebracht und weiterverarbeitet werden.

Die anfallenden Rückstände des Reduktionsmittels können mit den eventuell darin enthaltenen, unverbrauchten Reduktionsmitteln in einem gesonderten Vergasungsreaktor verwertet werden, wobei die aschebildenden Bestandteile vorteilhaft als flüssige Schlacke abgeschieden werden und das gebildete Rohgas im Etagenofen als Verbrennungs- oder Reduktionsgas genutzt wird.

Man kann demnach ein preiswerteres Reduktionsmittel, das einen relativ hohen Aschegehalt aufweist, benutzen und / oder mit einem relativ hohen Überschuß an Reduktionsmittel arbeiten was die Agglomeration der Reststoffe verhindert.

Im Fall, in dem mit einem Überschuß an Reduktionsmitteln gearbeitet wird, ist es möglich, die Rückstände aufzubereiten, um die unverbrauchten Reduktionsmittel abzutrennen und wieder zu verwenden. Dies kann z. B. durch Sieben der Rückstände erfolgen, wenn die unverbrauchten Reduktionsmittel in ausreichend grober Form vorliegen. Die unverbrauchten Reduktionsmittel können direkt in den Etagenofen zurückgeführt werden.

Das Chargieren von Reduktionsmitteln kann aber auch in mehrere Stufen aufgeteilt werden.

So besteht die Möglichkeit, daß grobkörnige Reduktionsmittel (1-3 mm) weiter oben in den Etagenofen eingebracht werden und feinkörnige Reduktionsmittel (< 1 mm) weiter unten zugegeben werden. Dadurch wird ein Austragen von Staub mit den Abgasen weitgehend vermieden und der Ablauf der Reaktion durch die weiter unten eingebrachten feinen Reduktionsmittelpartikel beschleunigt.

Durch das Chargieren von gröberen Partikeln wird der Verbrauch an Reduktionsmittel verringert, denn in den oberen Etagen auf denen eine oxidative Atmosphäre vorherrscht werden die kleinen Partikel schnell durch Reaktion mit H₂O und CO₂ aus dem Abgas verbraucht.

Der Prozeßraum ist in verschiedene Zonen unterteilt, die Feststoffe bewegen sich kontinuierlich von oben nach unten und die Gase werden von unten nach oben durch den Ofen geleitet. Durch die Unterteilung des Prozeßraums in verschiedene Zonen kann man die Prozeßbedingungen in den verschiedenen Zonen oder sogar pro Etage messen und gezielt beeinflussen.

Die schwermetall- und eisenoxidhaltigen Reststoffe können aber auch mit - mindestens einem Teil der benötigten - Reduktionsmittel vermischt werden, bevor sie in den Etagenofen eingebracht werden. Dies gilt besonders im Fall der Behandlung von Schlämmen die mit wenigstens einem Teil der benötigten Reduktionsmittel vermischt werden, bevor sie in den Ofen eingetragen werden. Die Schlämme haben nämlich meist eine klebrige Konsistenz und lassen sich, wenn sie mit Reduktionsmittel vermischt sind, leichter in den Ofen einbringen.

Die Vermischung mit den Reduktionsmitteln verhindert, daß das eingebene Material bei der Erwärmung Agglomerate bildet.

Durch gezieltes Zugeben von Reduktionsmitteln in den unteren Etagen des Ofens können die Reduktionsgase im Ofen auf eine optimale Konzentration eingestellt werden und somit ein besserer Metallisierungsgrad erreicht werden.

Die schwermetall- und eisenoxidhaltigen Reststoffe werden kontinuierlich von Rechen, die auf jeder Etage des Ofens angebracht sind, umgewälzt und nach und nach auf die darunterliegende Etage befördert.

Durch das dauernde Umwälzen wird ein Zusammenbacken der Partikel verhindert. Die Umwälzgeschwindigkeit hängt von vielen Faktoren wie z. B. der Geometrie der Rechen, der Dicke der Schichten usw. ab. Die schwermetallund eisenoxidhaltigen Reststoffe, das eventuell vorhandene Reduktionsmittel und das direkt reduzierte Eisen auf den Etagen sollte mindestens einmal pro ein bis drei Minuten umgewälzt werden, wodurch eine Agglomeration weitgehend verhindert wird.

Es besteht die Möglichkeit, sauerstoffhaltige Gase gezielt auf der Etage einzublasen, wo der Wärmebedarf durch Verbrennen der überschüssigen Prozeßgase abgedeckt werden muß.

Dabei ist es vorteilhaft, sauerstoffhaltige Gase zu verwenden, die eine Temperatur von mindestens 250°C haben.

Auf den untersten Etagen des Etagenofens kann zusätzlich ein gasförmiges Reduktionsmittel eingeblasen werden. Hierdurch wird ein höheres Reduktionspotential der Atmosphäre im Ofen realisiert und eine vollständigere Reduzierung der Oxide erreicht.

Gemäß einer weiteren vorteilhaften Ausführung werden eine oder mehrere Etagen im Ofen, die unterhalb den Etage liegen, auf die Reduktionsmittel eingebracht werden, mittels Brenner aufgeheizt.

Um die Konzentration an Reduktionsgasen im unteren Teil des Ofens nicht durch Rauchgase der Beheizung zu vermindern, kann hier auch indirekt d.h. durch eine Strahlungsbeheizung Energie zugeführt werden.

Gemäß einer anderen bevorzugten Ausführung werden an einer oder mehreren Etagen Gase aus dem Etagenofen abgesaugt. Diese heißen Gase können anschließend entweder durch einen CO₂-Wäscher geleitet werden, um die Gasmenge zu verringern und das Reduktionspotential des Gases zu erhöhen oder aber durch einen zusätzlichen Reaktor geleitet werden, in dem sich Kohlenstoff befindet, so daß das in den heißen Gasen enthaltene Kohlendioxyd mit dem Kohlenstoff reagiert um Kohlenmonoxid zu bilden gemäß dem Boudoirschen Gleichgewicht und dadurch das Reduktionspotential des Gases erhöht wird. Die an Kohlenmonoxid angereicherten Gase werden anschließend zurück in den Etagenofen geleitet.

Zu einer weiteren Erhöhung der Produktivität kann der Etagenofen unter einem bestimmten Überdruck gefahren werden. Dies ist im Gegensatz zu einem Drehofen, der über Wassertassen mit einem Durchmesser von zirka 50 m abgedichtet ist, bei einem Etagenofen, der nur kleine Abdichtungen an der Antriebswelle hat, sehr einfach zu realisieren. In einem solchen Fall müssen

Druckschleusen für die Eingabe und die Ausfuhr von Material vorgesehen werden.

Gemäß einem anderen Aspekt der vorliegenden Erfindung wird die Verwendung eines Etagenofens zur thermischen Behandlung schwermetall- und eisenoxidhaltiger Reststoffe wie z.B. Stäube und Schlämmen aus Elektro- bzw. Konverterstahlwerken gemäß dem beschriebenen Verfahren vorgeschlagen.

Weitere vorteilhafte Ausgestaltungen sind in den Unteransprüchen aufgeführt.

Im folgenden wird nun eine Ausgestaltung der Erfindung anhand der beiliegenden Figur beschrieben. Es zeigt:

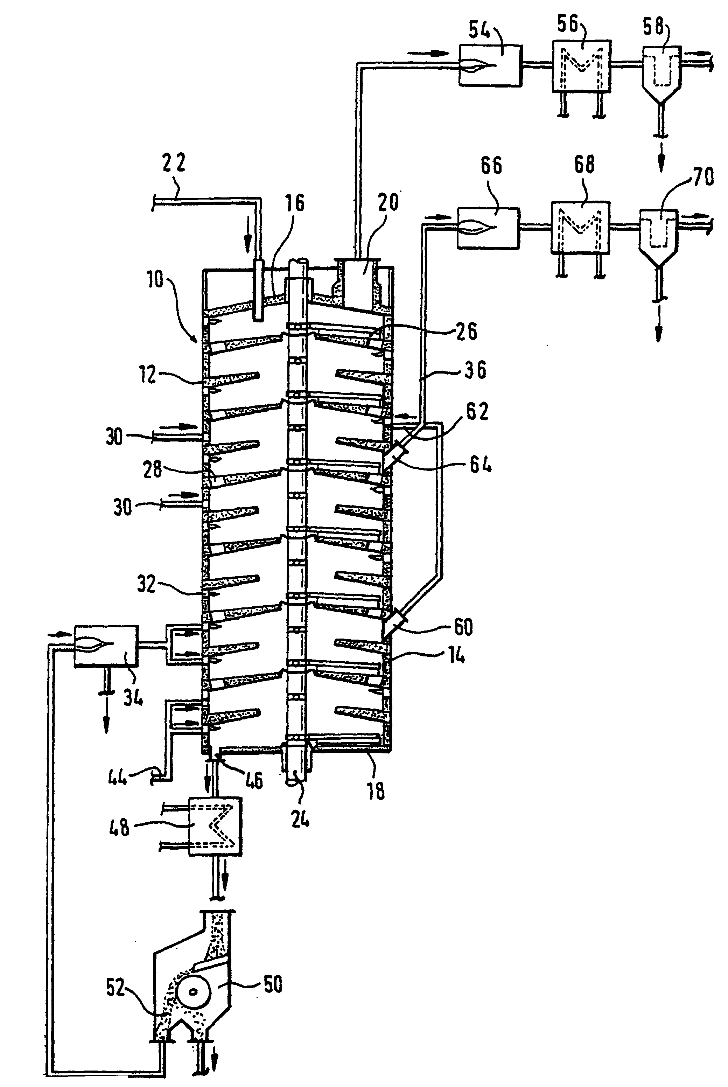

- Fig.1:: einen Schnitt durch einen Etagenofen zur thermischen Behandlung schwermetall- und eisenoxidhaltiger Reststoffe wie z.B. Stäube aus Elektro- oder Konverterstahlwerken.

Die Fig. 1 zeigt einen Schnitt durch einen Etagenofen 10, der mehrere - in diesem Fall zwölf - übereinander liegende Etagen 12 aufweist. Diese freitragenden Etagen 12, sowie der Mantel 14, Deckel 16 und der Boden 18 des Ofens sind aus feuerfestem Material.

Im Deckel 16 des Ofens 10 ist ein Abzug 20 vorgesehen, durch den die Gase aus dem Ofen evakuiert werden können und eine Öffnung 22, durch die die schwermetall- und eisenoxidhaltigen Reststoffe auf die oberste Etage aufgetragen werden kann.

In der Mitte des Ofens ist eine Welle 24 angebracht, an der Rechen 26 befestigt sind, die über die jeweiligen Etagen ragen.

Die Rechen 26 sind so ausgelegt, daß sie das Material auf einer Etage von innen nach außen und dann auf der darunterliegenden Etage von außen nach innen wälzen, um so das Material von oben nach unten durch den Ofen zu transportieren.

Die schwermetall- und eisenoxidhaltige Reststoffe und die Reduktionsmittel können auch getrennt in den Ofen eingebracht. Die Reststoffe werden in diesem Fall auf die erste Etage aufgebracht während die Reduktionsmittel auf eine der daruntergelegenen Etagen aufgeben werden und dort mit den schwermetall- und eisenoxidhaltigen Reststoffen in Kontakt gebracht werden.

Während des Transports werden die schwermetall- und eisenoxidhaltige Reststoffe sowie die Reduktionsmittel auf ungefähr 600°C bis 1000°C erhitzt.

Die Welle 24 und die Rechen 26 sind luftgekühlt und an den Rechen sind Öffnungen vorgesehen, durch die Luft in das Innere des Ofens strömen kann und dort zur Nachverbrennung genutzt werden kann.

In den Seitenwänden des Ofens 10 ist - normalerweise im oberen Drittel - mindestens eine Einlaßöffnung 30 angebracht, durch die Reduktionsmittel in den Ofen eingetragen werden können . Diese Reduktionsmittel können sowohl gasförmig als auch in flüssiger oder fester Form vorliegen. Bei den Reduktionsmitteln handelt es sich um Kohlenmonoxid, Wasserstoff, Erdgas, Erdöl und Erdölderivate, oder um feste Kohlenstoffträger, wie z.B. um Braunkohlekoks, Petrolkoks, Hochofenstaub, Kohle, o.ä..

Das Reduktionsmittel, in diesem Fall Kohle, das auch auf eine weiter unten im Ofen 10 liegende Etage eingebracht werden kann , wird dort durch die Rechen 26 mit den erhitzten, schwermetall- und eisenoxidhaltigen Reststoffen vermischt. Durch die hohe Temperatur und durch die Gegenwart von Kohlenmonoxid werden die in den Reststoffen enthaltenen Oxide während des Transportes durch den Etagenofen 10 nach und nach zu Metall reduziert.

Durch die kontrollierte Eingabe von festen, flüssigen und gasförmigen Reduktionsmitteln und von sauerstoffhaltigen Gasen an verschiedenen Stellen des Etagenofens 10 und durch die Möglichkeit, überschüssige Gase an kritischen Stellen abzusaugen, ist es möglich, die Reduktion der schwermetall- und eisenoxidhaltigen Reststoffe genau zu kontrollieren und das Verfahren unter optimalen Bedingungen durchzuführen.

Der Ofen erlaubt es einen Teil der Gase, die im Ofen nach oben strömen unterhalb der Etagen auf denen die Schwermetalle verdampfen, durch einen Absaugstutzen 60 in der Seitenwand aus dem Ofen 10 absaugen und oberhalb dieser Etagen durch einen Einlaß 62 wieder in den Ofen 10 einblasen.

Dadurch ist die auf den Etagen auf denen die Schwermetalle verdampfen, vorhandene Gasmenge gering. Sie können dann in einer relativ geringen Gasmenge auf diesen Etage durch einen Auslaß 64 in der Seitenwand aus dem Ofen 10 abgesaugt werden. Das geringe Volumen an Gas mit relativ hohem Gehalt an Schwermetall kann dann getrennt gereinigt werden. Durch die geringen Abgasmengen ergeben sich auf den entsprechenden Etagen niedrige Gasgeschwindigkeiten und so wird wenig Staub mit diesem Abgas ausgetragen. Dadurch ergibt sich eine sehr hohe Schwermetallkonzentration im Abgas.

Die Abgase werden anschließend in einer Nachbrennkammer 66 oxidiert wobei die Schwermetalle zu Schwermetalloxiden umgewandelt und werden in einer Filtereinrichtung 70 von den Abgasen getrennt werden. Bevor die Abgase in die Filtereinrichtung 70 gelangen werden sie in einer Abkühlvorrichtung 68 auf die erforderliche Temperatur abgekühlt.

In der Seitenwand sind Düsen 30 zum Einblasen von heißen (350°C bis 500°C) sauerstoffhaltigen Gasen vorgesehen, durch die man Luft oder ein anderes sauerstoffhaltiges Gas in den Ofen 10 eingeben kann. Durch die hohen Temperaturen und durch die Gegenwart von Sauerstoff verbrennt ein Teil des Kohlenstoffs zu Kohlendioxid, der wiederum mit dem im Überschuß vorhandenen Kohlenstoff reagiert und zu Kohlenmonoxid umgewandelt wird. Das Kohlenmonoxid reduziert schließlich die Oxide.

Da diese Reaktion überwiegend endotherm ist, ist es sinnvoll, im unteren Teil des Ofens Brenner 32 anzubringen, die eine gleichbleibend hohe Temperatur in den untersten Etagen des Ofens sicherstellen. Hier können Gas- oder Kohlenstaubbrenner eingesetzt werden.

Diese Brenner 32 können zur Vorheizung und/oder zum Zusatzheizen mit Gas oder Kohlenstaub mit Luft befeuert werden. Durch das Mengenverhältnis zwischen Sauerstoff und Brennmaterial kann ein zusätzliches Reduktionsgas erzeugt werden oder bei Luftüberschuß wird ein Nachverbrennen der Prozeßgase erreicht. Im Falle einer Kohlenstaubfeuerung kann im Brenner ein Überschuß an Kohlenmonoxid erzeugt werden. Bei außenliegenden Brennkammern kann vermieden werden, daß die Asche der verbrannten Kohle in den Ofen gelangt und sich mit dem Eisen vermischt. Die Temperaturen in den Brennkammern werden so gewählt, daß die anfallende Schlacke flüssig abgezogen werden kann und in verglaster Form entsorgt werden kann. Durch die Erzeugung von Kohlenmonoxid wird der Verbrauch an festen Kohlenstoffträgern im Ofen 10 reduziert und somit auch der Aschegehalt im fertigen Produkt.

In der letzten oder in den beiden letzten Etagen ist die Zugabe eines gasförmigen Reduktionsmittels, z.B. Kohlenmonoxid oder Wasserstoff durch spezielle Düsen 44, vorgesehen. In dieser Atmosphäre mit erhöhtem Reduktionspotential kann die Reduktion der Eisenoxide vervollständigt werden.

Anschließend wird das erzeugte Eisen durch den Auslaß 46 im Boden 18 des Ofens 10 zusammen mit der Asche ausgetragen.

Das am Auslaß 46 ausgetragene Eisen wird mit der Asche und gegebenenfalls noch weiterverwertbaren Reduktionsmitteln in einer Abkühlvorrichtung 48 abgekühlt. Anschließend wird das reduzierte Eisen über eine Magnetabscheidervorrichtung 50 von der Asche und den eventuell noch weiterverwertbaren Reduktionsmitteln getrennt.

Weiterverwertbare Reduktionsmittel 52 werden dann in einer aussenliegenden Brennkammer 34 verbrannt. Die durch die Verbrennung der Reduktionsmittel entstandenen Gasen können wiederum in den Ofen 10 eingetragen werden, während die Rückstände Asche der Reduktionsmittel über einen Auslaß als Asche oder flüssige Schlacke abgeführt werden.

Das Gasgemisch aus dem Ofen gelangt durch den Abzug 20 in einen Nachbrenner 54, wo die brennbaren Gase des Gasgemischs verbrannt werden. Anschließend wird das Gasgemisch in eine mit einem Kühlmedium beaufschlagten Abkühlvorrichtung 56 eingetragen und abgekühlt. Das abgekühlte Gasgemisch wird anschließend mit Hilfe eines Zyklonfilters 58 gereinigt, bevor es nach außen abgeführt wird.

## Patentansprüche

1. Verfahren zur thermischen Behandlung schwermetall- und eisenoxidhaltiger Reststoffe in einem Etagenofen, welcher mehrere übereinanderliegende Etagen aufweist, in dem
schwermetall- und eisenoxidhaitige Reststoffe kontinuierlich in den Etagenofen eingebracht werden und auf die oberste Etage eingetragen und nach und nach auf die unteren Etagen transferiert werden,
Reduktionsmittel auf die oberste und/oder auf eine der darunterliegenden Etagen eingebracht werden und mit den schwermetall- und eisenoxidhaltigen Reststoffen reagieren, um Schwermetalle und direkt reduziertes Eisen zu bilden,
die schwermetallhaltigen Gase separat auf den Etagen, auf denen die Schwermetalle verdampfen, abgesaugt, werden, und
das Eisen zusammen mit Rückständen von den Reduktionsmitteln im Bereich der untersten Etage des Etagenofens ausgetragen wird,
wobei unterhalb der Etagen, auf denen die Schwermetalle verdampfen, Gase aus dem Etagenofen abgesaugt werden und anschließend ganz oder teilweise oberhalb dieser Etagen wieder in den Etagenofen eingeblasen werden.

2. Verfahren nach Anspruch 1 **dadurch gekennzeichnet, daß** die Abgase in einem Nachbrenner aufbereitet werden wobei die Schwermetalle zu Schwermetalloxiden umgewandelt werden und in einer Filtereinrichtung von den Abgasen getrennt werden.

3. Verfahren nach einem der vorhergehenden Ansprüche **dadurch gekennzeichnet, daß** auf einer Etage, die unterhalb der Etage liegt, auf die die Reduktionsmittel eingebracht werden, Gase abgesaugt werden.

4. Verfahren nach einem der vorhergehenden Ansprüche **dadurch gekennzeichnet, daß** das direkt reduzierte Eisen nach dem Austrag aus dem Etagenofen auf unter 700°C abgekühlt wird und anschließend durch einen Magnetabscheider von den Rückständen des Reduktionsmittels getrennt wird.

5. Verfahren nach Anspruch 1 bis 3 **dadurch gekennzeichnet, daß** das direkt reduzierte Eisen nach dem Austrag aus dem Etagenofen im heißen Zustand durch Klassierung von den Rückständen des Reduktionsmittels getrennt wird.

6. Verfahren nach Anspruch 4 oder 5 **dadurch gekennzeichnet, daß** das aufbereitete, direkt reduzierte Eisen zu Pellets bzw. zu Briketts weiterverarbeitet wird.

7. Verfahren nach einem der vorhergehenden Ansprüchen **dadurch gekennzeichnet, daß** das direkt reduzierte Eisen mit oder ohne Rückstände eingeschmolzen wird.

8. Verfahren nach einem der Ansprüche 4 oder 5 **dadurch gekennzeichnet, daß** eventuell unverbrauchte Reduktionsmittel von den Rückständen nach dem Austragen aus dem Etagenofen getrennt werden.

9. Verfahren nach Anspruch 8 **dadurch gekennzeichnet, daß** die Rückstände der Reduktionsmittel in einem Vergasungsreaktor verwertet werden, wobei die aschebildenden Bestandteile als flüssige Schlacke abgeschieden werden und das gebildete Rohgas im Etagenofen genutzt wird und die dadurch entstandene Wärme dem Ofen zugeführt.

10. Verfahren nach einem der vorhergehenden Ansprüche **dadurch gekennzeichnet, daß** das Reduktionsmittel in flüssiger, fester Form und/oder gasförmig in den Etagenofen eingebracht wird.

11. Verfahren nach einem der vorhergehenden Ansprüche **dadurch gekennzeichnet, daß** Reduktionsmittel auf verschiedene Etagen des Etagenofens eingebracht werden kann.

12. Verfahren nach Anspruch 11 **dadurch gekennzeichnet, daß** grobkörniges Reduktionsmittel weiter oben und feinkörniges Reduktionsmittel weiter unten in den Etagenofen eingebracht werden kann.

13. Verfahren nach einem der vorhergehenden Ansprüche **dadurch gekennzeichnet, daß** ein Überschuß an Reduktionsmittel in den Etagenofen eingebracht wird.

14. Verfahren nach einem der vorhergehenden Ansprüche **dadurch gekennzeichnet, daß** die schwermetall- und eisenoxidhaltigen Reststoffe und zumindest ein Teil des benötigten Reduktionsmittels miteinander vermischt werden, bevor sie in den Etagenofen eingebracht werden.

15. Verfahren nach einem der vorhergehenden Ansprüche **dadurch gekennzeichnet, daß** sauerstoffhaltige Gase gezielt auf verschiedene Etagen eingeblasen werden.

16. Verfahren nach Anspruch 15 **dadurch gekennzeichnet, daß** die sauerstoffhaltigen Gase, eine Temperatur von mindestens 250°C haben.

17. Verfahren nach einem der vorhergehenden Ansprüche **dadurch gekennzeichnet, daß** auf den untersten Etagen des Etagenofens gasförmige Reduktionsmittel eingeblasen werden.

18. Verfahren nach einem der vorhergehenden Ansprüche **dadurch gekennzeichnet, daß** eine oder mehrere Etagen des Ofens, direkt oder indirekt aufgeheizt werden.

19. Verfahren nach einem der vorhergehenden Ansprüche **dadurch gekennzeichnet, daß** auf einer oder mehreren Etagen Gase aus dem Etagenofen abgesaugt werden.

20. Verfahren nach Anspruch 19 **dadurch gekennzeichnet, daß** das Reduktionspotential der abgesaugten Gase erhöht wird und die Gase anschließend in den Etagenofen eingebracht werden.

21. Verfahren nach einem der vorhergehenden Ansprüche **dadurch gekennzeichnet, daß** das Verfahren unter Überdruck ausgeführt wird.

22. Verwendung eines Etagenofens zur thermischen Behandlung schwermetallund eisenoxidhaltiger Reststoffe gemäß dem Verfahren nach einem der vorhergehenden Ansprüche.

## Claims

1. Process for thermal treatment of residual materials containing heavy metal and iron oxide in a multiple-hearth furnace with several hearths one above the other, in which the residual materials containing heavy metal and iron oxide are introduced continuously into the multiple-hearth furnace, charged on the top hearth and gradually transferred to the lower hearths, reducing agents are introduced to the top and/or to one of the underlying hearths and react with the residual materials containing heavy metal and iron oxide in order to form heavy metals and directly reduced iron, the gases containing heavy metals are exhausted separately on the hearths on which the heavy metals are vaporised and the iron together with residues of the reducing agents is discharged in the area of the bottom hearth of the multiple hearth furnace, gases being exhausted from the multiple-hearth furnace under the hearths on which the heavy metals are vaporised and then being wholly or partially re-injected into the multiple-hearth furnace above these hearths.

2. Process according to claim 1, **characterised in that** the waste gases are processed in an after-burner, the heavy metals being converted to heavy metal oxides and separated from the waste gases in a filter.

3. Process according to one of the preceding claims, **characterised in that** gases are exhausted on a hearth, which is below the hearth, to which reducing agents are introduced.

4. Process according to one of the preceding claims, **characterised in that** the directly reduced iron is cooled to below 700°C after discharge from the multiple-hearth furnace and subsequently separated from the reducing agent residues by a magnetic separator.

5. Process accordingly to claims 1 to 3, **characterised in that** the directly reduced iron is separated from the reducing agent residues in the hot state by screening after discharge from the multiple-hearth furnace.

6. Process according to claims 4 to 5, **characterised in that** the processed, directly reduced iron is further processed into pellets or briquettes.

7. Process according to one of the preceding claims, **characterised in that** the directly reduced iron is melted with or without residues.

8. Process according to one of claims 4 or 5, **characterised in that** any unused reducing agents are separated from the residues after discharge from the multiple-hearth furnace.

9. Process according to claim 8, **characterised in that** the residues of the reducing agent are used in a gasification reactor, the ash-forming constituents being separated as liquid slag, the crude gas formed being used in the multiple-hearth furnace and the resulting heat fed to the furnace.

10. Process according to one of the preceding claims, **characterised in that** the reducing agent is introduced in liquid, solid and/or gaseous form into the multiple-hearth furnace.

11. Process according to one of the preceding claims, **characterised in that** reducing agents can be introduced to different hearths in the multiple-hearth furnace.

12. Process according to claim 11, **characterised in that** coarse-grained reducing agents can be introduced at higher levels into the multiple-hearth furnace and fine-grained reducing agents further below.

13. Process according to one of the preceding claims, **characterised in that** excess reducing agent is introduced into the multiple-hearth furnace.

14. Process according to one of the preceding claims, **characterised in that** the residual materials containing heavy metal and iron oxide and at least part of the required reducing agent are mixed with each other before they are introduced into the multiple-hearth furnace.

15. Process according to one of the preceding claims, **characterised in that** gases containing oxygen are injected selectively to different hearths.

16. Process according to claim15, **characterised in that** the gases containing oxygen have a temperature of at least 250°C.

17. Process according to one of the preceding claims, **characterised in that** gaseous reducing agents are injected into the bottom hearths of the multiple-hearth furnace.

18. Process according to one of the preceding claims, **characterised in that** one or more hearths in the furnace are heated directly or indirectly.

19. Process according to one of the preceding claims, **characterised in that** gases are exhausted from the multiple-hearth furnace at one or more hearths.

20. Process according to claim19, **characterised in that** the reduction potential of the exhausted gases is increased and the gases are subsequently introduced into the multiple-hearth furnace.

21. Process according to one of the preceding claims, **characterised in that** the process is carried out under overpressure.

22. Use of a multiple-hearth furnace for thermal treatment of residual materials containing heavy metal and iron oxide by the process according to one of the preceding claims.

## Revendications

1. Procédé de traitement thermique de résidus contenant des métaux lourds et de l'oxyde de fer dans un four à étages, lequel comprend plusieurs étages placés l'un au-dessus de l'autre, dans lequel
des résidus contenant des métaux lourds et de l'oxyde de fer sont introduits de façon continue dans le four à étages et chargés sur le plus haut étage et transférés progressivement sur les étages inférieurs,
des réducteurs sont chargés sur le plus haut étage et/ou sur un des étages placés au-dessous et réagissent avec les résidus contenant des métaux lourds et de l'oxyde de fer pour former des métaux lourds et du fer préréduit,
les gaz contenant des métaux lourds sont aspirés séparément sur les étages sur lesquels les métaux lourds s'évaporent et
le fer, ensemble avec des résidus des réducteurs, est évacué dans la zone du plus bas étage du four à étages,
des gaz étant aspirés dans le four à étages au-dessous des étages sur lesquels les métaux lourds s'évaporent, puis réinjectés dans le four à étages, totalement ou partiellement, au-dessus de ces étages.

2. Procédé selon la revendication 1, **caractérisé en ce que** les gaz brûlés sont recyclés dans un dispositif de postcombustion, les métaux lourds étant transformés en oxydes de métaux lourds et séparés des gaz brûlés dans un dispositif filtrant.

3. Procédé selon l'une quelconque des revendications précédentes, **caractérisé en ce que** des gaz sont aspirés sur un étage qui est situé au-dessous de l'étage sur lequel sont chargés les réducteurs.

4. Procédé selon l'une quelconque des revendications précédentes, **caractérisé en ce que** le fer préréduit, après l'évacuation du four à étages, est refroidi à moins de 700°C puis séparé des résidus du réducteur par un séparateur magnétique.

5. Procédé selon l'une quelconque des revendications 1 à 3, **caractérisé en ce que** le fer préréduit, après l'évacuation du four à étages, est séparé des résidus du réducteur à l'état chaud par classement.

6. Procédé selon la revendication 4 ou 5, **caractérisé en ce que** le fer préréduit recyclé est transformé en pellets respectivement en briquettes.

7. Procédé selon l'une quelconque des revendications précédentes, **caractérisé en ce que** le fer préréduit est fondu avec ou sans résidus.

8. Procédé selon l'une des revendications 4 ou 5, **caractérisé en ce que** des réducteurs éventuellement inépuisés sont séparés des résidus après l'évacuation du four à étages.

9. Procédé selon la revendication 8, **caractérisé en ce que** les résidus des réducteurs sont récupérés dans un réacteur de gazéification, les constituants formant des cendres étant séparés sous forme de laitier liquide et le gaz brut obtenu étant utilisé dans le four à étages et la chaleur ainsi générée étant amenée au four.

10. Procédé selon l'une quelconque des revendications précédentes, **caractérisé en ce que** le réducteur est introduit dans le four à étages à l'état liquide, solide et/ou gazeux.

11. Procédé selon l'une quelconque des revendications précédentes, **caractérisé en ce que** le réducteur peut être chargé sur différents étages du four à étages.

12. Procédé selon la revendication 11, **caractérisé en ce qu'**un réducteur à gros grain peut être introduit plus haut et un réducteur à grain fin plus bas dans le four à étages.

13. Procédé selon l'une quelconque des revendications précédentes, **caractérisé en ce qu'**un excédent de réducteur est introduit dans le four à étages.

14. Procédé selon l'une quelconque des revendications précédentes, **caractérisé en ce que** les résidus contenant des métaux lourds et de l'oxyde de fer et au moins une partie du réducteur nécessaire sont mélangés avant l'introduction dans le four à étages.

15. Procédé selon l'une quelconque des revendications précédentes, **caractérisé en ce que** des gaz oxygénés sont injectés de manière ciblée sur différents étages.

16. Procédé selon la revendication 15, **caractérisé en ce que** les gaz oxygénés ont une température d'au moins 250°C.

17. Procédé selon l'une quelconque des revendications précédentes, **caractérisé en ce que** des réducteurs gazeux sont injectés sur les plus bas étages du four à étages.

18. Procédé selon l'une quelconque des revendications précédentes, **caractérisé en ce qu'**un ou plusieurs étages du four sont chauffés de manière directe ou indirecte.

19. Procédé selon l'une quelconque des revendications précédentes, **caractérisé en ce que** des gaz sont aspirés dans le four sur un ou plusieurs étages.

20. Procédé selon la revendication 19, **caractérisé en ce que** le potentiel réducteur des gaz aspirés est augmenté et **en ce que** les gaz sont ensuite introduits dans le four à étages.

21. Procédé selon l'une quelconque des revendications précédentes, **caractérisé en ce que** le procédé est mis en oeuvre en surpression.

22. Utilisation d'un four à étages pour le traitement thermique de résidus contenant des métaux lourds et de l'oxyde de fer conformément au procédé selon l'une des revendications précédentes.
